# EUROPÄISCHE PATENTSCHRIFT

(11) **EP 1 917 848 B1**
(45) Veröffentlichungstag und Bekanntmachung des Hinweises auf die Patenterteilung: **06.05.2009**
(21) Anmeldenummer: 07016574.1
(22) Anmeldetag: 23.08.2007
(51) Int. Cl.: A01D 78/10, A01B 73/06

(54) **Heumaschine**
Hay-making machine
Machine de fenaison

(30) Priorität: 06.11.2006 DE 202006016943 U
(43) Veröffentlichungstag der Anmeldung: 07.05.2008
(73) Patentinhaber: FELLA-Werke GmbH, 90533 Feucht (DE)
(72) Erfinder: Angleitner, Klaus, 91094 Langensendelbach-Bräuningshof (DE); Kohl, Bernhard, 90537 Feucht (DE)
(74) Vertreter: Grünecker, Kinkeldey, Stockmair & Schwanhäusser Anwaltssozietät

(56) Entgegenhaltungen:
- EP-A- 1 495 666
- DE-U1- 29 507 128
- DE-U1-2202006 010 71
- FR-A- 2 377 142

## Beschreibung

Die Erfindung betrifft eine Heumaschine gemäß dem Oberbegriff des Anspruchs 1. Solche Heumaschinen sind bereits aus den Stand der Technik, z. B. aus der DE-U-202006010712 bekannt.

Heumaschinen, insbesondere Kreiselzettwender mit großer Arbeitsbreite müssen für den Transport auf öffentlichen Straßen auf die zulässige Transportbreite umgestellt werden. Dazu ist es bekannt, die äußeren Kreisel, welche an den zur Bodenanpassung gelenkig miteinander verbundenen Rahmenteilen angeordnet sind, nach hinten zu schwenken, während das mittlere Kreiselpaar an seiner Position verbleibt. Die Heumaschine kann aber auch aus zwei Maschinenhälften bestehen, welche für die Transportfahrt nach hinten geschwenkt werden. Für den Schwenkvorgang werden, wie z. B. aus der oben genannten EP 1 495 666 bekannt, hydraulische Stellzylinder verwendet, welche zwischen dem, mit der Zugdeichsel verbundenen mittleren Rahmenteil und den Maschinenhälften angeordnet sind. Bei den bisher bekannten Ausführungen greifen die Stellzylinder direkt an den schwenkbaren Rahmenteilen an und sind daher hinter den Kreiseln angeordnet. Durch das Gewicht der mit Abstand hinter den Tasträdern der Maschine liegenden Zylinder entsteht eine unerwünschte Hecklastigkeit der Maschine, welche durch ein Gegengewicht an der Deichsel oder eine entsprechend schwer gestaltete Deichsel kompensiert werden muss. Zur Versteifung der bei Maschinen mit großer Arbeitsbreite weit ausladenden Rahmenteile, ist es aus dem deutschen Gebrauchsmuster 2 95 10 537 bekannt, dass vor den Kreiseln angeordnete Schutzgestänge so zu gestalten, dass damit die Rahmenteile und die Rahmengelenke verstärkt werden.

Hiervon ausgehend liegt der vorliegenden Erfindung die Aufgabe zugrunde eine kostengünstige, nicht hecklastige Heumaschine bereitzustellen.

Erfindungsgemäß wird diese Aufgabe durch die kennzeichnenden Merkmale des Anspruchs 1 gelöst. Durch diese geschickte Anordnung sind die Stellglieder dann gleichzeitig in das als Verstärkung der Heumaschine ausgebildete Schutzgestänge integriert und bilden somit einen Teil des Schutzgestänges.

Vorzugsweise sind die Stellglieder für die einschwenkbaren Rahmenteile, d. h. hier für die Maschinenhälften als doppelt wirkende hydraulische Hubzylinder ausgebildet. Dabei kann an jeder Maschinenseite jeweils ein Hubzylinder angeordnet sein, wobei für den Gleichlauf der beiden Hubzylinder ein Mengenteiler vorgesehen sein kann.

Vorzugsweise sind die Stellglieder zwischen einem mittleren Rahmenteil, das nicht verschwenkt wird, und den einschwenkbaren Rahmenteilen der drittinnersten Kreisel angeordnet. Somit kann eine Entlastung der beiden inneren Rahmengelenke erfolgen.

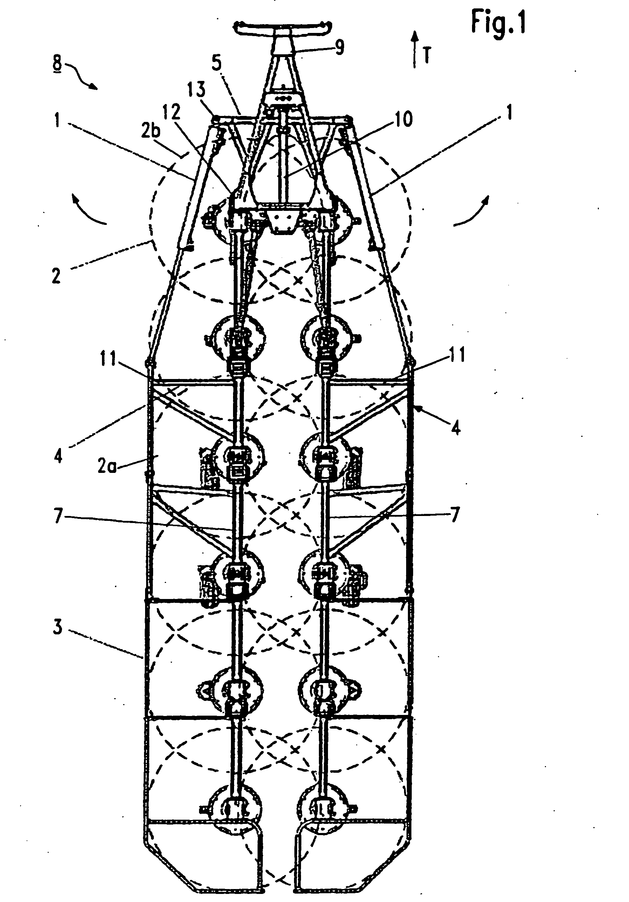

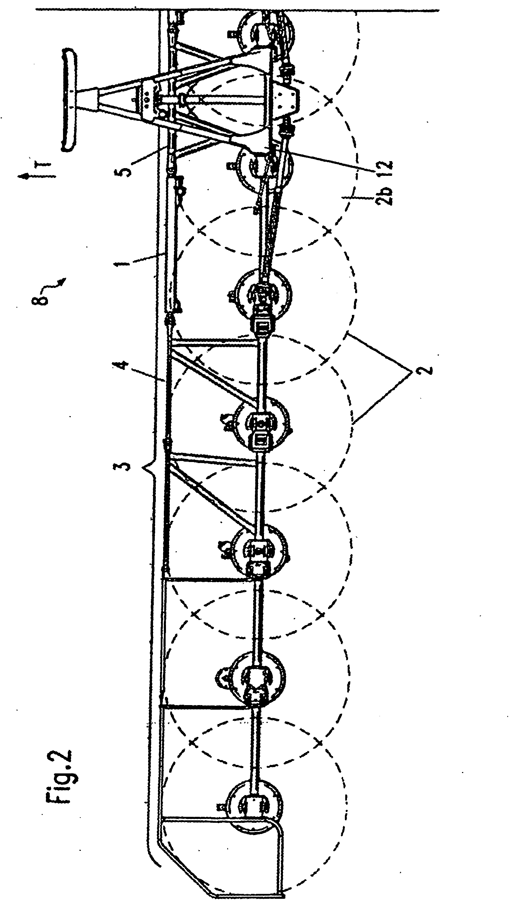

Die vorliegende Erfindung wird nachfolgend unter Bezugnahme der Figuren 1 und 2 näher erläutert.

Figur 1 zeigt schematisch eine Aufsicht auf eine Heumaschine gemäß der vorliegenden Erfindung in Transportstellung.

Figur 2 zeigt schematisch eine Aufsicht auf eine Maschinenhälfte, der in Figur 1 gezeigten Heumaschine in Arbeitsstellung.

Figur 1 zeigt eine mögliche Ausführungsform einer Heumaschine 8 gemäß der vorliegenden Erfindung. Eine solche Heumaschine 8 dient insbesondere zum Zetteln und Wenden von Halmgut. Die Heumaschine 8 weist eine Zugdeichsel 9 auf, über die die Heumaschine 8 in Zugrichtung T gezogen wird. Die Heumaschine 8 weist zwei Maschinenhälften auf, die aus entsprechenden Rahmenteilen 4 gebildet sind. Die Rahmenteile 4 sind wie aus den Figuren 1 und 2 hervorgeht, aus einer Arbeitsstellung in eine Transportstellung einschwenkbar, damit die Arbeitsbreite für den Transport auf öffentlichen Straßen auf die zulässige Transportbreite umgestellt werden kann. Die einschwenkbaren Rahmenteile 4 einer entsprechenden Maschinenhälfte weisen einen Rahmenbalken 7 auf, der zur Bodenanpassung aus gelenkig miteinander verbundenen Abschnitten gebildet ist. Weiter weisen die Rahmenteile 1 Querstreben 11 auf, die den Rahmenbalken 7 mit einem verstärkendem Schutzgestänge 3 verbinden. An den Rahmenteilen 4, hier an dem Rahmenbalken, sind die sich drehenden Kreisel 2 angeordnet. Das vorgeschriebene Schutzgestänge 3 befindet sich derart vor den Kreiseln 2, dass der Zutritt zu den rotierenden Kreiseln 2 verhindert wird. Wie aus Figur 2 hervorgeht, liegt in bekannter Weise das Schutzgestänge 3 von der Deichsel 9 aus betrachtet vor den Kreiseln 2 und ragt hier seitlich etwas über den Arbeitsbereich der Kreisel 2 hinaus und dient somit auch als Schutzbügel. Auch das mittlere Rahmenteil, das nicht verschwenkt wird, liegt zumindest teilweise vor den innersten Kreiseln 2b und dient somit auch als Schutzabdeckung. Mit 10 ist eine Gelenkwelle bezeichnet. In Transportstellung der Rahmenteile 4 beziehungsweise der Maschinenhälften ist das verstärkende Schutzgestänge 3 im wesentlichen seitlich vor den Kreiseln 2 angeordnet.

Die erfindungsgemäße Heumaschine 8 weist Stellglieder 1 auf, die die Rahmenteile 4 aus einer Arbeitsstellung in eine Transportstellung einschwenken. Es weist jede Maschinenhälfte ein entsprechendes Stellglied 1 auf. Das entsprechende Stellglied ist vor den Kreiseln 2 angeordnet und in das als Verstärkung der Maschine ausgebildete Schutzgestänge 3 integriert. In diesem Ausführungsbeispiel ist das Stellglied 1 mit dem mittleren Rahmenteil 5 und dem Schutzgestänge 3 gelenkig verbunden. Dabei sind die Stellglieder 1 in einem Bereich zwischen dem mittleren Rahmenteil 5 und den Rahmenteilen 4 der drittinnersten Kreisel 2a, angeordnet. Somit erfolgt eine Entlastung der beiden inneren Rahmengelenke. Als Stellglieder beziehungsweise Stellmotoren werden Stellzylinder, insbesondere doppelt wirkende hydraulische Hubzylinder verwendet. Für den Gleichlauf der beiden Hubzylinder ist ein Mengenteiler vorgesehen.

Werden die Schwenkbaren Rahmenteile 4 aus der in Figur 1 gezeigten Transportstellung in die in Figur 2 gezeigte Arbeitsstellung geschwenkt, so wird das Stellglied 1 hier der Hubzylinder 1 betätigt, wobei die Entfernung zwischen dem mittleren Rahmenteil 5 und der Stelle, an der das Stellglied am Schutzgestänge 3 angreift, verkleinert wird, so dass die Rahmenteile 4 aus einer im wesentlichen parallel zur Zugrichtung verlaufenden Stellung in eine im wesentlichen senkrecht zur Zugrichtung verlaufende Stellung gezogen werden. Die Rahmenteile 4 werden dabei um die Schwenkachsen 12 und 13 geschwenkt. Das mittlere Kreiselpaar 2b und das mittlere Rahmenteil 5 verbleiben in ihrer Position.

Wie insbesondere aus Figur 2 hervorgeht, liegt in der Arbeitsstellung das Stellglied vor den Kreiseln 2, insbesondere hier zumindest teilweise vor den innersten, d. h. mittleren Kreisel 2b und dem zweiten Kreisel (von der Mitte aus betrachtet). Das Stellglied 1 übernimmt somit die Funktion einer Umstelleinrichtung und gleichzeitig die Funktion einer Schutzvorrichtung, welche den Zutritt zu den rotierenden Kreiseln verhindert. Die Anordnung des Stellglieds 1 vor den Kreiseln 2 verhindert darüber hinaus das Problem der Hecklastigkeit.

## Patentansprüche

1. Heumaschine (8) mit
über Stellglieder (1) aus einer Arbeitsstellung in eine Transportstellung einschwenkbaren Rahmenteilen (4),
wobei die Rahmenteile (4) Rahmenbalken (7) aufweisen, an denen drehende Kreisel angeordnet sind, und die Stellglieder vor den Kreisel (2) liegen,
**gekennzeichnet durch**
ein die Rahmenteile (4) verstärkendes Schutzgestänge (3), das vor den Kreiseln (2) angeordnet ist, wobei
die Stellglieder (1) einen Teil des Schutzgestänges (3) bilden.

2. Heumaschine nach Anspruch 1,
**dadurch gekennzeichnet, dass**
die Stellglieder (1) als doppelwirkende hydraulische Hubzylinder ausgebildet sind.

3. Heumaschine nach Anspruch 2,
**dadurch gekennzeichnet, dass**
an jeder Maschinenseite jeweils ein Hubzylinder (1) angeordnet ist, wobei für den Gleichlauf der beiden Hubzylinder (1) ein Mengenteiler vorgesehen ist.

4. Heumaschine nach mindestens einem der Ansprüche 1-3,
**dadurch gekennzeichnet, dass**
die Stellglieder (1) zwischen einem mittlerem Rahmenteil (5) und den einschwenkbaren Rahmenteilen (4) der drittinnersten Kreiseln (2) angeordnet sind.

## Claims

1. Hay-making machine (8) with
frame parts (4) which can be pivoted inwards from a working position into a transport position by means of actuator members (1),
which frame parts (4) have frame beams (7) on which rotating gyrating elements are disposed and the actuator members lie in front of the gyrating elements (2),
**characterised by**
a protective rod linkage (3) reinforcing the frame parts (4) which is disposed in front of the gyrating elements (2), and
the actuator members (1) form a part of the protective rod linkage (3).

2. Hay-making machine as claimed in claim 1,
**characterised in that**
the actuator members (1) are provided in the form of double-acting hydraulic displacement cylinders.

3. Hay-making machine as claimed in claim 2,
**characterised in that**
a displacement cylinder (1) is disposed on each machine side and a volume divider is provided for synchronising the two displacement cylinders (1).

4. Hay-making machine as claimed in at least one of claims 1-3,
**characterised in that**
the actuator members (1) are disposed between a middle frame part (5) and the inwardly pivotable frame parts (4) of the third innermost gyrating elements (2).

## Revendications

1. Faneuse (8), avec
des pièces de châssis (4) pouvant être rabattues par des actionneurs (1) d'une position de travail vers une position de transport,
lesdites pièces de châssis (4) comportant des barres de châssis (7) sur lesquelles sont disposées des toupies rotatives et les actionneurs étant situés devant les toupies (2),
**caractérisée par** une timonerie protectrice (3)
renforçant les pièces de châssis (4), montée devant les toupies (2),
les actionneurs (1) formant une partie de la timonerie protectrice (3).

2. Faneuse selon la revendication 1,
**caractérisée en ce que** les actionneurs (1) sont formés de vérins hydrauliques de levage à double action.

3. Faneuse selon la revendication 2,
**caractérisée en ce qu'**un vérin de levage (1) est disposé sur chaque côté de la faneuse, un distributeur étant prévu pour le synchronisme des deux vérins de levage (1).

4. Faneuse selon l'une des revendications 1 à 3 au moins,
**caractérisée en ce que** les actionneurs (1) sont disposés entre une pièce de châssis centrale (5) et les pièces de châssis rabattables (4) des toupies (2) en troisième position à partir du centre.
